# DEMANDE DE BREVET EUROPEEN

(11) **EP 1 193 978 A1**
(43) Date de publication de la demande: **03.04.2002**
(21) Numéro de dépôt: 01203621.6
(22) Date de dépôt: 25.09.2001
(51) Int. Cl.: H04N 7/36, H04N 7/50

(54) **Procédé de rafraîchissement d'écran**

(30) Priorité: 29.09.2000 FR 0012460
(71) Demandeur: Koninklijke Philips Electronics N.V., 5621 BA Eindhoven (NL)
(72) Inventeur: Danis, Frédéric, 75008 Paris (FR)
(74) Mandataire: de la Fouchardière, Marie-Noelle

(57) **Abrégé**

L'invention concerne une méthode de rafraîchissement d'écran à vitesse variable permettant de réduire notablement la consommation de puissance des écrans d'affichage. Elle a des applications notamment dans les équipements dit embarqués, tels que les téléphones mobiles, pour rafraîchir sélectivement des zones de l'écran en fonction de la position des objets vidéo qui ont bougé d'une image à l'autre et du vecteur de mouvement caractérisant leur déplacement, calculé conformément à une recommandation de type MPEG 2 ou 4.

Application : systèmes de transmission numériques MPEG 2/4.

## Description

L'invention concerne la réception d'images vidéo en vue de leur visualisation sur un écran d'affichage. Elle concerne plus particulièrement la procédure de rafraîchissement de l'écran.

L'invention a de nombreuses applications notamment dans les systèmes de transmission vidéo conformes à une norme de type MPEG 2 ou 4 (de l'anglais Moving Picture Experts Group).

Il est connu du document de brevet EP 0 811 866 A1, une méthode de rafraîchissement d'un écran d'affichage pour rafraîchir sélectivement une image fixe affichée à l'écran en fonction de la présence de parties actives / inactive de l'image fixe.

Un objet de l'invention est de proposer une méthode de rafraîchissement permettant de réduire notablement la consommation de puissance des écrans d'affichage, notamment dans les équipements dit embarqués, tels que les téléphones mobiles.

Le document cité s'applique à l'affichage d'images fixes dans lesquelles sont définies des zones actives et inactives. Il n'est donc pas prévu, dans le document cité, de rafraîchir sélectivement des zones de l'écran en fonction d'une information de mouvement représentant des variations entre deux images successives, comme c'est le cas dans l'invention, qui s'applique à la réception d'images vidéo comprenant des objets en mouvement.

Selon l'invention, il est prévu un récepteur à écran d'affichage vidéo pour recevoir des images vidéo successives codées, comportant un décodeur vidéo pour décoder les images reçues et un contrôleur d'écran pour commander l'affichage sur l'écran des images décodées. Le décodeur vidéo comporte des moyens de détection de mouvement pour détecter des variations entre des images successives et pour en déduire une information de mouvement. Le contrôleur d'écran comporte une commande de rafraîchissement pour rafraîchir sélectivement des zones d'affichage de l'écran avec des fréquences de rafraîchissement déterminées en fonction de l'information de mouvement fournie par le décodeur.

Selon une caractéristique importante de l'invention, le décodeur vidéo comprend des moyens d'identification d'objets vidéo pour identifier des objets vidéo dans les images vidéo reçues de sorte que les moyens de détection de mouvement sont prévus pour détecter des variations sur les objets identifiés, l'information de mouvement étant liée aux objets identifiés pour décrire un mouvement de ces objet entre des images successives.

L'invention s'applique également à un procédé de rafraîchissement pour rafraîchir des images vidéo successives affichées sur un écran vidéo, comportant une étape préalable de décodage des images vidéo pour calculer des paramètres de mouvement décrivant des variations entre des images successives et une étape de rafraîchissement sélectif pour rafraîchir des zones d'affichage de l'écran à des fréquences de rafraîchissement différentes en fonction des paramètres de mouvement précédemment calculés.

La description suivante, faite en regard des dessins ci-annexés, le tout donné à titre d'exemple non limitatif fera bien comprendre comment l'invention peut être réalisée.

La figure 1 est un schéma montrant un récepteur à écran selon l'invention.

La figure 2 est un schéma de principe pour illustrer le fonctionnement du récepteur selon l'invention.

La figure 3 est un organigramme pour illustrer un procédé de rafraîchissement d'écran selon l'invention.

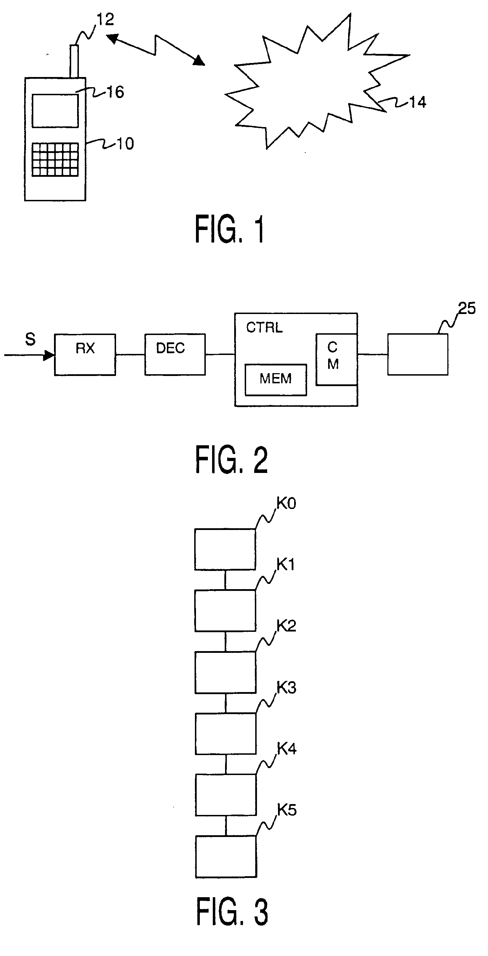

L'exemple de récepteur représenté à la figure 1 est un récepteur radio téléphonique 10 conforme à une norme de type UMTS (de l'anglais Universal Mobile Telecommunication System). Cependant, l'invention peut avantageusement être mise en oeuvre dans d'autres systèmes de télécommunications permettant de transmettre et de recevoir des images vidéo.

Il comprend une antenne d'émission / réception 12, pour émettre et recevoir des images vidéo transmises par voie radio via un système de transmission 14 et un écran d'affichage vidéo 16, pour afficher les images vidéo reçues.

La figure 2 est un schéma bloc d'un récepteur pour mettre en oeuvre l'invention. Les fonctions de chaque bloc peuvent par exemple être effectuées par des composants situés à l'intérieur du téléphone 10. Des moyens de réception RX permettent de recevoir un signal vidéo S représentant des images vidéo numériques codées. Un décodeur numérique DEC décode ces images pour les transmettre à un contrôleur d'écran CTRL, muni de moyens de mémorisation MEM pour mémoriser les images avant des les afficher sur un écran vidéo 25. Le contrôleur d'écran comporte une commande CM pour déclencher le rafraîchissement de l'écran.

Selon l'invention, le décodeur vidéo DEC comporte des moyens de détection de mouvement pour détecter des variations entre les images successives reçues et pour en déduire une information de mouvement. Un tel décodeur est prévu, par exemple, dans la norme MPEG 2 ou 4. La norme recommande d'utiliser une telle information de mouvement pour ne transmettre au récepteur que les vecteurs de mouvement associés aux objets vidéo qui composent l'image, au lieu de l'image complète. Ainsi, en ne transmettant que des paramètres de déplacement décrivant le déplacement des objets entre deux images successives, le nombre total de données transmises est considérablement réduit.

L'invention prévoit d'utiliser ces informations de mouvement fournies par le décodeur DEC, par exemple sous la forme de vecteurs ou de paramètres de déplacement, en vue de rafraîchir sélectivement des zones d'affichage de l'écran en fonction de la mobilité relative des d'objets présents sur cette zone. Ces informations peuvent être utilisées, par exemple, pour ne rafraîchir que les zones de l'écran contenant des objets mobiles et pas les autres zones contenant des objets immobiles d'une image à l'autre. A titre de variante, on peut définir des priorités. Les zones à rafraîchir en priorité ainsi que la vitesse de rafraîchissement optimale pour chaque zone peuvent être déterminées en fonction des information de mouvement fournies par le décodeur vidéo.

Par exemple, dans le cas d'un récepteur conforme à la norme MPEG 4, le décodeur est muni de moyens d'identification des objets vidéo qui composent l'image reçue. A chaque objet vidéo identifié est associé un vecteur de mouvement qui décrit le déplacement de l'objet entre deux images vidéo. Selon un mode de réalisation de l'invention, il est prévu de définir des valeurs de seuil associées à des vitesses de rafraîchissement prédéterminées, les valeurs de seuil représentant des amplitudes de déplacement prédéterminées au delà desquelles la zone concernée de l'écran doit être rafraîchie avec la vitesse de rafraîchissement associée. Si l'écran présente une certaine rémanence, il est même envisagé de ne rafraîchir la totalité de l'écran ou bien uniquement les zones ne contenant pas d'objets mobiles qu'à l'expiration du délai prévu par le constructeur. En effet, au bout de ce délai, la luminance de l'écran devient trop faible et il est nécessaire de le rafraîchir. Mais à part cet aspect lié à la rémanence de l'écran, le rafraîchissement de toutes les zones de l'écran comportant des objets identifiés par le décodeur DEC peut se faire de façon sélective en sélectionnant la vitesse optimale en fonction du déplacement des objets vidéo qui composent les images successives.

La figure 3 illustre un exemple de procédé de rafraîchissement d'un écran vidéo selon l'invention. Le procédé comporte les étapes suivantes, représentées par les cases K0 à K5.
- K0, réception des images vidéo codées,
- K1, décodage des images vidéo reçues,
- K2, identification des objets vidéo qui composent les images,
- K3, détermination des vecteurs de mouvement associés aux objets identifiés,
- K4, sélection de vitesses de rafraîchissement prédéterminées pour rafraîchir sélectivement des zones de l'écran en fonction de l'amplitude des vecteurs de mouvement associés aux objets vidéo identifiés,
- K5, déclenchement d'une commande de rafraîchissement sélectif des différentes zones de l'écran, selon la sélection effectuée à l'étape précédente.

## Revendications

1. Récepteur à écran d'affichage vidéo pour recevoir des images vidéo successives codées, comportant un décodeur vidéo pour décoder les images reçues et un contrôleur d'écran pour commander l'affichage sur l'écran des images décodées, le décodeur vidéo comportant des moyens de détection de mouvement pour détecter des variations entre des images successives et pour en déduire une information de mouvement, et le contrôleur d'écran comportant une commande de rafraîchissement pour rafraîchir sélectivement des zones d'affichage de l'écran avec des fréquences de rafraîchissement déterminées en fonction de l'information de mouvement fournie par le décodeur.

2. Récepteur selon la revendication 1, dans lequel le décodeur vidéo comprend des moyens d'identification d'objets vidéo pour identifier des objets vidéo dans les images vidéo reçues, les moyens de détection de mouvement étant prévus pour détecter des variations sur les objets identifiés et l'information de mouvement étant liée à un objet identifié pour décrire un mouvement dudit objet entre des images successives.

3. Récepteur selon la revendication 1 ou 2, dans lequel l'information de mouvement comprend un vecteur de mouvement représentant un déplacement de l'objet vidéo dans un plan parallèle à l'image.

4. Récepteur selon l'une des revendications 1 à 3, dans lequel l'écran d'affichage est rémanent et dans lequel les zones à rafraîchir ainsi que les vitesses de rafraîchissement sont déterminées en fonction de l'amplitude du mouvement des objets vidéo présents dans ces zones.

5. Récepteur selon l'une des revendications 1 à 4, dans lequel le décodeur vidéo est conforme à une norme du type MPEG 2 ou 4.

6. Procédé de rafraîchissement pour rafraîchir des images vidéo successives affichées sur un écran vidéo, comportant une étape préalable de décodage des images vidéo pour calculer des paramètres de mouvement décrivant des variations entre des images successives et une étape de rafraîchissement sélectif pour rafraîchir des zones d'affichage de l'écran à des fréquences de rafraîchissement différentes en fonction des paramètres de mouvement précédemment calculés.

7. Produit programme d'ordinateur, pour un récepteur selon l'une des revendications 1 à 6, comprenant des portions de code de logiciel qui, une fois chargées dans le récepteur, lui permettent d'exécuter les étapes du procédé selon la revendication 6.

8. Equipement électronique portable à écran d'affichage vidéo pour afficher des images vidéo, comportant un récepteur selon l'une des revendications 1 à 5, pour recevoir lesdites images vidéo.
